# EUROPEAN PATENT APPLICATION

(11) **EP 4 786 220 A1**
(43) Date of publication of application: **05.08.2026**
(21) Application number: 24871683.9
(22) Date of filing: 28.08.2024
(51) Int. Cl.: B60H 1/00

(54) **CONTROL SYSTEM OF AIR HANDLING SYSTEM OF VEHICLE, AND CONTROL METHOD OF AIR HANDLING SYSTEM OF VEHICLE**

(30) Priority: 26.09.2023 GB 202314712
(71) Applicant: Nissan Motor Co., Ltd., Yokohama-shi, Kanagawa 221-0023 (JP)
(72) Inventor: ESTEBANEZ Jagoba, Cranfield, Bedfordshire MK430DB (GB)
(74) Representative: Global IP Europe Patentanwaltskanzlei
(86) International application number: PCT/JP2024/030695
(87) International publication number: WO 2025/069882

(57) **Abstract**

In a control system for an air handling system of a vehicle, the air handling system controls delivery of fresh air and recirculated air to a cabin of the vehicle. The control system includes one or more controllers configured to: receive a signal indicative of a number of occupants within the vehicle cabin; determine a maximum period for operating the air handling system in an air recirculation mode based on the indicated number of occupants; and output one or more control signals to the air handling system for terminating the air recirculation mode once the maximum period has elapsed from initiation of the air recirculation mode.

## Description

### TECHNICAL FIELD

The present invention relates to a control system for an air handling system of a vehicle, and a method of controlling an air handling system of a vehicle.

### BACKGROUND ART

Conventionally, air handling systems have been developed that control fresh air and recirculated air supplies to the vehicle cabin. Such systems are operable in air recirculation modes, in which the fresh air supply may be cut-off, or reduced, and air from the vehicle cabin may be recirculated. The recirculated air heats/cools the vehicle cabin, while minimising the energy consumption of the air handling system.

### SUMMARY OF THE INVENTION

### TECHNICAL PROBLEM

Incidentally, when the supply of fresh air is reduced or cut-off, the oxygen level in the cabin reduces and the oxygen is replaced by carbon dioxide as the occupants respire or breathe. As a result, high levels of carbon dioxide build up in the vehicle cabin, which can induce drowsiness in the vehicle occupants and reduce responsiveness. As an air handling system for mitigating the risk of carbon dioxide build up in the vehicle cabin, it is conceivable to use a complex array of air quality sensors arranged both inside and outside the vehicle cabin to provide real-time air quality control. However, such air handling systems are expensive and add complexity to the vehicle, and additional sensors, sophisticated control modules, harnesses and the like are required for the system to function.

An object of the present invention is to provide a simpler and less expensive control system for an air handling system of a vehicle.

### TECHNICAL SOLUTION

In a control system for an air handling system of a vehicle, the air handling system controls delivery of fresh air and recirculated air to a cabin of the vehicle. The control system includes one or more controllers configured to: receive a signal indicative of a number of occupants within the vehicle cabin; determine a maximum period for operating the air handling system in an air recirculation mode based on the indicated number of occupants; and output one or more control signals to the air handling system for terminating the air recirculation mode once the maximum period has elapsed from initiation of the air recirculation mode.

### ADVANTAGEOUS EFFECTS

According to the above configuration, a simpler and less expensive control system for an air handling system of a vehicle can be provided.

### BRIEF DESCRIPTION OF DRAWINGS

[FIG. 1] FIG. 1 is a schematic illustration of a plan view of a vehicle with an overlay of an exemplary system in accordance with an embodiment.
[FIG. 2A] FIG. 2A schematically illustrates an exemplary air handling system of the vehicle, shown in FIG. 1, operating in a fresh air mode.
[FIG. 2B] FIG. 2B schematically illustrates the air handling system, shown in FIG 2A, operating in an air recirculation mode.
[FIG. 3] FIG. 3 is a schematic illustration of an exemplary controller / control system of the system shown in FIG. 1.
[FIG. 4] FIG. 4 shows an exemplary graph with first and second curves plotting the increase, from initiation of the air recirculation mode, of carbon dioxide (CO2) concentration within a cabin of the vehicle, shown in FIG. 1, for respective numbers of occupants.
[FIG. 5] FIG. 5 schematically illustrates an exemplary method of operating the system in accordance with an embodiment.

### DESCRIPTION OF EMBODIMENTS

Embodiments of the present invention relate to methods and systems for controlling delivery of fresh air and recirculated air to a vehicle cabin, such as a cabin of an automotive vehicle.

The delivery of fresh air and recirculated air to the cabin is controlled by an air handling system, which may include one or more flaps, valves, or other airflow control elements, operable to control respective supplies of fresh air and recirculated air to the vehicle cabin. For example, the air handling system may include first and second air ducts / air duct arrangements for delivering respective supplies of fresh air and recirculated air to the vehicle cabin, and one or more flaps may be controllable to open or close outlets from such air ducts to the vehicle cabin.

Fresh air may therefore be delivered to the cabin by directing airflow from an inlet of the air duct in communication with outside air, and the air inside the cabin may subsequently be drawn through another inlet in communication with the cabin and recirculated through the air handling system.

In embodiments of the present invention, the air handling system is operable in at least two modes of operation, including a fresh air mode of operation and an air recirculation mode of operation. In the fresh air mode, the proportion of fresh air delivered to the cabin is greater than the proportion of recirculated air delivered to the vehicle cabin such that the recirculated air is not detrimental to the air quality inside the vehicle cabin. In some examples, the supply of recirculated air to the vehicle cabin may be entirely or substantially cut-off or stopped in the fresh air mode. In contrast, in the air recirculation mode, the proportion of recirculated air delivered to the cabin is greater than the proportion of fresh air delivered to the vehicle cabin and therefore the air quality inside the vehicle cabin may reduce over time. For example, the supply of fresh air may be entirely or substantially stopped or cut-off in the air recirculation mode, leading to a rise in the carbon dioxide (CO2) concentration inside the vehicle cabin. In each case, the air handling system may be controlled to deliver a respective proportion of fresh air to recirculated air to the vehicle cabin in each of the fresh air and air recirculation modes of operation.

Preferably, in order to maximise the utilization of recycled air, while maintaining air quality standards, the control system is configured to determine a maximum period for operating the air handling system in the air recirculation mode based on an indicated number of occupants inside the vehicle cabin. The maximum period is estimated as the time taken for one or more air quality parameters to reach a prescribed threshold and the control system outputs one or more control signals for terminating the air recirculation mode once the maximum period has elapsed from its initiation. In this respect, the inventors have found through testing that one or more air quality parameters inside the vehicle cabin (such as a Carbon Dioxide level) can be accurately estimated during driving based on the number of occupants inside the cabin and the time spent in the air recirculation mode.

The control system is therefore configured to receive a signal indicative of a number of occupants within the vehicle cabin, for example from an occupant detection system of the vehicle or by input through a human machine interface of the vehicle, and the control system is configured to determine a maximum period for operating the air handling system in the air recirculation mode based on the indicated number of occupants. Once the maximum period has elapsed, the control system outputs a control signal to the air handling system to terminate the air recirculation mode, for example by switching to the fresh air mode of operation.

It is envisaged that the methods and systems of the invention will therefore provide for energy efficient air handling, and cabin heating/cooling, without introducing the detrimental effects typically associated with air recirculation modes of operation, such as occupant drowsiness.

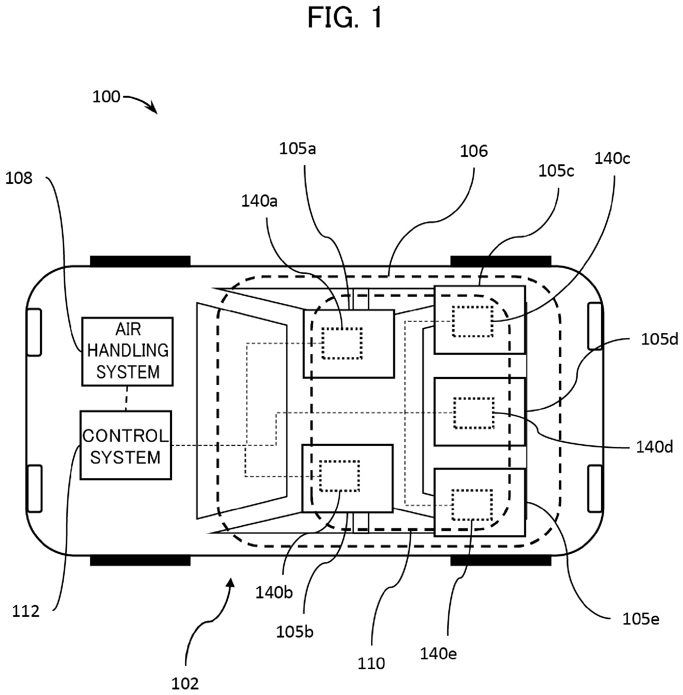

Embodiments of the invention shall now be discussed in more detail with reference to FIG. 1 to 5.

FIG. 1 shows a plan view of a vehicle 100 with a schematic overlay of a system 102 in accordance with an embodiment of the invention. In this example, the vehicle 100 takes the form of a passenger car having a vehicle cabin 106 with a five-passenger configuration. The vehicle cabin 106 therefore includes first, second, third, fourth and fifth seats 105a-e provided for respective occupants.

This example is not intended to be limiting on the scope of the invention though and, in other examples, the vehicle 100 may take various other forms, such as a bus, truck, or train, amongst other passenger vehicles. It shall be appreciated that the occupant capacity of the vehicle cabin 106 may therefore differ in other examples, and the five-seat cabin configuration depicted in FIG. 1 is therefore not intended to be limiting on the scope of the invention. For example, although a five-seat cabin configuration is shown in the exemplary vehicle 100 of FIG. 1, in other examples, the vehicle 100 may take the form of a larger passenger vehicle, such as a bus, having a twenty-seat cabin configuration. In this context, the vehicle cabin is intended to mean a passenger compartment of the vehicle and it shall be appreciated that, in each case, the occupants may be provided with respective seats or designated areas inside the vehicle cabin.

The system 102 of devices includes an air handling system 108, an occupant detection system 110 and a control system 112 configured to control the air handling system 108 based on a number of occupants inside the vehicle cabin 106.

The air handling system 108 is configured to control airflow into the vehicle cabin 106. In particular, the air handling system 108 is configured to control respective supplies of fresh air and recirculated air to the vehicle cabin 106. For this purpose, the air handling system may include one or more airflow control elements for controlling or setting a proportion of fresh air to recirculated air for delivery to the vehicle cabin 106. As shall be appreciated by the skilled person, such airflow control elements may include one or more controllable flaps, fans, blowers, or valves, for example.

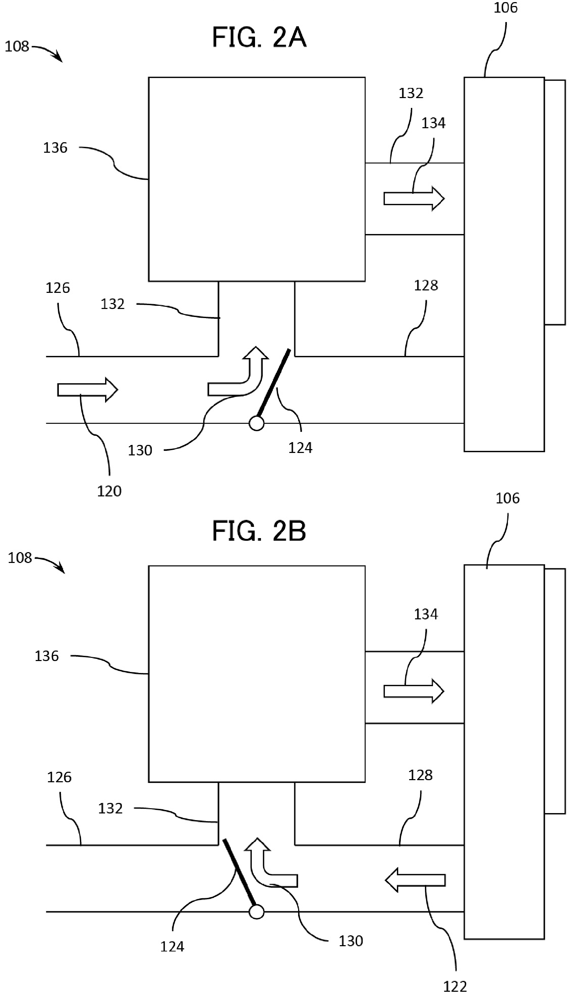

Air handling systems of this type are well-known in the art. As an example, FIG. 2A and 2B show a simplified schematic representation of an exemplary air handling system 108 in accordance with an embodiment of the invention.

As shown in FIG. 2A and 2B, the air handling system 108 includes a first air duct 126 for a supply of fresh air 120 and a second air duct 128 for a supply of recirculated air 122 to the vehicle cabin 106. The first and second air ducts 126, 128 meets at a junction 130 in this example, and the air handling system 108 includes an airflow control element 124 in the form of a controllable flap. The controllable flap 124 is operable to control a proportion of fresh air 120 to recirculated air 122 delivered downstream to a third air duct 132, extending from the junction 130 for delivery to the vehicle cabin 106. In use, the flap 124 may therefore be operated to cut-off or close the supply of either the fresh air 120 or the recirculated air 122 from the first and second air ducts 126, 128. In other examples, it shall be appreciated that the delivery of fresh air 120 and recirculated air 122 to the cabin 106 may be controlled by one or more additional airflow control elements 124 of the air handling system 108. However, for the sake of simplicity, in the following example the flap 124 is operated to control the delivery of fresh air 120 and recirculated air 122 to the vehicle cabin 106.

Although not shown in FIG. 2A and 2B, the first air duct 126 extends from one or more inlets in communication with air outside the vehicle cabin 106 for delivery to the junction 130. The second air duct 128 extends from one or more inlets (not shown) in communication with the air inside the vehicle cabin 106 for returning the cabin air to the junction 130. For example, the second air duct 128 may include a set of inlets distributed about the vehicle cabin 106, from which air is drawn, for example by a fan, into the second air duct 128.

The third air duct 132 extends from the junction 130 and may include a series of pipes or channels through which the air can flow to different outlets arranged around the cabin 106 for achieving a distributed delivery of output air 134 about the cabin 106.

The third air duct 132 may therefore include one or more air handling devices 136 (represented schematically in FIG. 2A and 2B) for preparing the output air 134 for delivery to the vehicle cabin 106. For example, such air handling device(s) may include one or more filters, heat exchangers or fans, arranged inside the third air duct 132, or arranged inside a respective air handling unit connected thereto. For example, the fresh air 120 may be passed through a filter to prevent particulates, such as dust, soot or pollen for example, from entering the vehicle cabin 106 from outside, while the recirculated air 122 may be passed through one or more filters to capture dust or particulates already present in the vehicle cabin 106. The filtered air may subsequently be heated or cooled by a heat exchanger of the air handling system 108 to provide a desired air delivery temperature and/or the air may be pressurised by a fan or blower for delivery to the cabin 106. In other examples, it shall be appreciated that the air handling system 108 may additionally or alternatively include one or more filters, heat exchangers and/or fans, arranged in the first or second air ducts 126, 128 for processing the respective air supplies upstream of the junction 130.

It shall also be appreciated that the air handling system 108 may differ in layout from vehicle to vehicle and therefore FIG. 2 only shows a simplified schematic version of the air handling system 108. In any case, in addition to controlling the respective supplies of fresh air 120 and recirculated air 122 to the vehicle cabin 106, the air handling system 108 may therefore be capable of varying the air flow rate into the cabin 106, selectively distributing the air inside the cabin 106, and/or modifying the temperature of the delivered output air 134 by either heating or cooling. As noted above, for this purpose, the air handling system 108 may include one or more fans or blowers to control the volumetric rate at which the air is fed to the cabin 106, heat exchangers to add or remove heat energy from the air before it enters the cabin 106, ducting for distributing the air to selected locations within the cabin 106 and flaps and/or valves for selectively distributing the air through the ducting.

The air handling system 108 is operable in at least two modes of operation, including a fresh air mode of operation and an air recirculation mode of operation. In the fresh air mode, the proportion of fresh air 120 delivered to the cabin 106 is greater than the proportion of recirculated air 122 delivered to the vehicle cabin 106. For example, the flap 124 may be operated in the fresh air mode of operation to close the second air duct 128 and thereby cut-off or stop the supply of recirculated air 122 to the vehicle cabin 106.

In particular, in FIG. 2A, the air handling system 108 is shown operating in the fresh air mode of operation, with the flap 124 moved to a first position to close the second air duct 128 and provide fresh air 120 to the vehicle cabin 106 via the third air duct 132.

In contrast, in the air recirculation mode, the proportion of recirculated air 122 delivered to the cabin 106 is greater than the proportion of fresh air 120 delivered to the vehicle cabin 106. For example, the supply of fresh air 120 may be stopped or cut-off in the air recirculation mode by operating the flap 124 to close the first air duct 126 and open the second air duct 128.

The air handling system 108 is shown operating in the air recirculation mode in FIG. 2B with the flap 124 moved to a second position to open the second air duct 128 and close the first air duct 126. Air inside the vehicle cabin 106 is therefore drawn into the one or more air inlets of the second air duct 128 and passes through the second and third air ducts 128, 132 for redelivery to the vehicle cabin 106. The recirculated air 122 may be reheated or cooled inside the third air duct 132 to control the air temperature inside the vehicle cabin 106 in an energy efficient manner.

This example is not intended to be limiting on the scope of the invention though and, in other examples, the air handling system 108 may not produce a binary output, i.e. providing either fresh air or recirculated air supply. Instead, the one or more airflow control elements 124, such as the flap, may be controlled to provide a greater proportion of fresh air to recirculated air in the fresh air mode of operation and a greater proportion of recirculated air to fresh air in the air recirculation mode, each having a mix of recycled air and fresh air .

Advantageously, returning to FIG. 1, the system 102 further includes the occupant detection system 110 for determining a number of occupants inside the vehicle cabin 106, which is used, in turn, to control the air handling system 108, particularly in the air recirculation mode.

The occupant detection system 110 may take various suitable forms that are known in the art for this purpose. In an example, the occupant detection system 110 may include a set of seat pressure sensors 140 a-e. Each seat pressure sensor 140 a-e may be arranged in a respective seat 105 a-e inside the vehicle cabin 106 and may be configured to produce a signal indicative of the occupancy of that vehicle seat 105 a-e. Additionally, or alternatively, the occupant detection system 110 may include one or more seatbelt sensors, such as a seatbelt engagement sensor, configured to generate a signal indicative of the usage of the respective seatbelt. The use of seatbelts in a vehicle is very often a legal requirement and can therefore be used to determine the number of occupants inside the vehicle cabin 106.

The occupant detection system 110 is not intended to be restricted to the use of sensors for determining the number of occupants inside the vehicle cabin 106 though. In other examples, the number of occupants may be determined additionally or alternatively via user input. For example, the occupant detection system 110 may additionally or alternatively include a human-machine interface, comprising one or more buttons, dials, touch-screens, or interactive displays, via which a user may manually input, select or adjust the number of occupants inside the vehicle cabin 106.

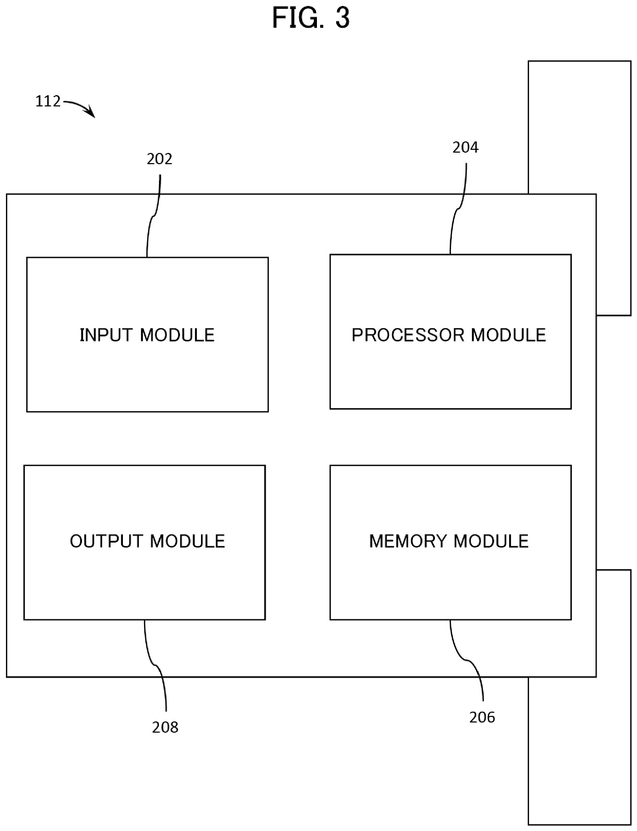

In each case, the control system 112 is configured to receive a signal from the occupant detection system 110 that is indicative of the number of occupants within the vehicle cabin 106. Based on this information, the control system 112 is configured to determine a maximum period for operating the air handling system 108 in the air recirculation mode, as described in more detail below with additional reference to FIG. 3.

FIG. 3 schematically illustrates an exemplary control system 112 in accordance with an embodiment of the invention.

As shown in FIG. 3, the control system 112 includes one or more controllers or modules for controlling the air handling system 108 based on the indicated number of occupants.

In this example, the control system 112 is shown to include an input module 202, a processor module 204, a memory module 206 and an output module 208. That is, in the described example four functional elements, units or modules are shown. Each of these units or modules may be provided, at least in part, by suitable software running on any suitable computing substrate using conventional or customer processors and memory. Some or all of the units or modules may use a common computing substrate (for example, they may run on the same server) or separate substrates, or different combinations of the modules may be distributed between multiple computing devices. The example architecture of the control system 112 is not intended to be limiting on the scope of the invention though and, in other examples, it shall be appreciated that the architecture may take other suitable forms.

The input module 202 is electrically connected to the occupant detection system 110 and configured to receive signals from the occupant detection system 110 that are indicative of the number of occupants inside the vehicle cabin 106.

The processor module 204 is configured to determine the maximum period for operating the air handling system 108 in the air recirculation mode based on the indicated number of occupants. In this context, the maximum period is determined as a maximum length of time that one or more air quality parameters can be maintained within a desired operational range, while operating the air handling system 108 in the air recirculation mode, i.e. the time taken for an air quality parameter to reach a threshold level. For example, the maximum period may be determined as the maximum length of time that a CO2 concentration level remains less than or equal to a respective CO2 concentration threshold. The CO2 concentration threshold may be set at a respective level to avoid inducing one or more detrimental effects in the occupants, such as drowsiness for example.

For this purpose, the processor module 204 may access one or more look-up tables comprising data that is indicative of the time taken, from initiating the air recirculation mode, for an air quality parameter to reach a threshold value inside the vehicle cabin 106 according to the numbers of vehicle occupants.

In examples, the maximum periods may be predefined values in the look-up table for respective numbers of vehicle occupants.

In other examples, the one or more look-up table may include values of an air quality parameter, such as the CO2 concentration level, as a function of time for respective numbers of occupants inside the vehicle cabin 106. For example, the look-up table may include, or be derived from, one or more curves or graphical plots, where each curve represents the variation of the CO2 concentration level, from initiating the air recirculation mode, for a respective number of occupants inside the vehicle cabin 106.

The data in the one or more look-up tables may be preprogramed into the processor module 204 for example, having been determined previously through experimentation and/or predictive modelling. In this respect, experimentation may take the form of physical testing and the one or more look-up tables may therefore store test data associated with the vehicle 100 for the indicated number of vehicle occupants. The test data may comprise real-world measurements obtained from a test version of the vehicle 100 while monitoring the air quality parameter during the air recirculation mode with different number of vehicle occupants. An example of such test data may be obtained from a test version of the vehicle 100 that is fitted with sensing equipment configured to measure the CO2 concentration in the vehicle cabin 106 for respective numbers of occupants while the air recirculation mode is enabled. Once the test data has been acquired from the test vehicle, which may be substantially identical to the vehicle 100, the data can be applied more generally to inform the control of the air handling system 108 based solely on the number of occupants inside the vehicle 100. Additionally, or alternatively, predictive modelling could be used in computer based study performed using known inputs such as the average CO2 output of an adult human and a model of the vehicle cabin 106, for example including a volumetric measure of the vehicle cabin 106. Cabin volume is proportional to the amount of available air in the cabin 106 and therefore cabin volume is an important factor to account for in modelling air quality parameters, such as the CO2 concentration.

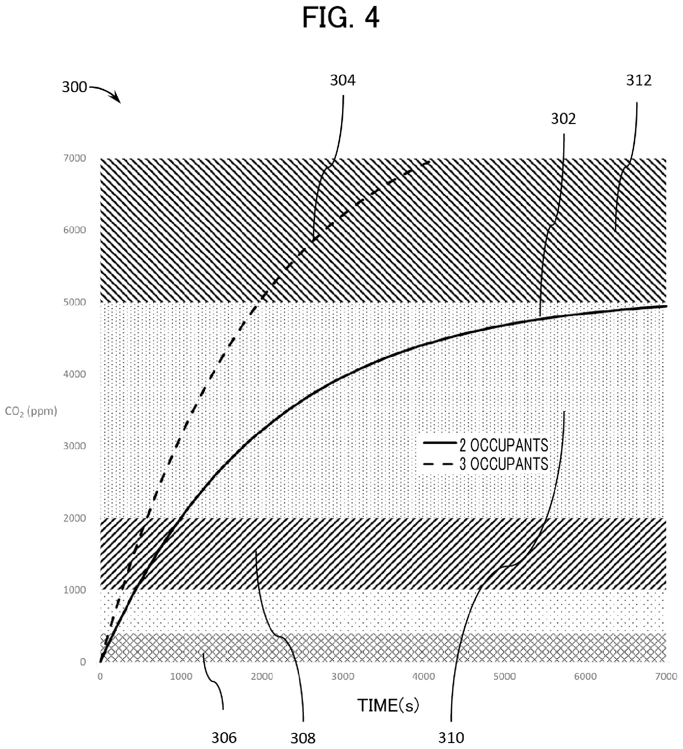

An example graph 300 that may be stored in, reflect, or otherwise be used to derive, the data in the one or more look-up tables is shown in FIG. 4. The graph 300 includes a first curve 302 and a second curve 304, each indicating the increase of carbon dioxide (CO2) within the vehicle cabin 106 over time for a respective number of occupants during the air recirculation mode. In particular, in this example, the first curve 302 shows the increase in the CO2 concentration level over time when two occupants are inside the vehicle cabin 106 and the second curve 304 shows the increase in the CO2 concentration level over time when three occupants are inside the vehicle cabin 106.

During breathing, or respiration, oxygen (O2) is taken into the body and CO2 is liberated from the body. If a person occupies a confined space where oxygen is not being readily replenished by fresh air, there can be a noticeable decrease in available O2 and an increase in the amount of CO2 present in the air of the space. The same is true for a cabin of a vehicle with one or more occupants present.

As can be seen in the graph 300, the number of occupants present in the cabin 106 has a significant effect on the rate of increase of CO2. By way of example, the graph 300 also indicates different thresholds of CO2 concentration, illustrated by first 306, second 308, third 310 and fourth 312 regions on the graph 300.

In this example, the indicated thresholds correspond to levels of CO2 concentration, which can have an effect on the human body, as follows:
First region 306: < 400 ppm - Normal concentration of CO2 present in fresh air 120;
Second region 308: 1,000 -2,000 ppm -Concentration associated with complaints of drowsiness;
Third region 310: 2,000 -5,000 ppm -Concentration associated with headaches, sleepiness and stagnant/stale/stuffy air; and
Fourth region 312: >= 5,000 ppm - Concentration that Occupational Safety and Health Administration (OSHA) considers to be the Permissible Exposure Limit (PEL) of CO2 for 8 hours.

The processor module 204 may be configured to use the thresholds of such regions to determine the maximum period of the air recirculation mode. For example, where the control system 112 is configured to keep the CO2 concentration below one of the CO2 concentration thresholds described above, the processor module 204 may use that threshold for reading off or otherwise determining a respective maximum period for operation in the air recirculation mode based on the indicated number of occupants.

The processor module 204 may therefore be configured to use the one or more look-up tables to determine the maximum period for the air recirculation mode based on the indicated number of occupants.

It shall be appreciated that such look-up tables may be stored in the memory module 206 of the control system 112 and accessed by the processor module 204 to determine the maximum period for operation in the air recirculation mode.

In examples, the processor module 204 may be configured to calculate the maximum period using the look-up table data. For this purpose, the processor module 204 may use a baseline reference level for the air quality parameter when the air recirculation mode if initiated and the processor module 204 may include one or more data processing algorithms that are known in the art for determining the time taken for the air quality parameter to reach the threshold based on the indicated number of occupants and the data in the look-up table. In particular, including one or more algorithms for calculating the time taken for the air quality parameter level to change from the baseline reference level to the threshold level. To give an example, the processor module 204 may be configured to determine the maximum period for the air recirculation mode by assuming that the CO2 concentration level is equal to a baseline concentration of CO2 present in fresh air when the air recirculation mode is initiated (e.g. equal to a predefined normal concentration of CO2 present in fresh air) and calculate the time taken for the CO2 concentration level to increase to the threshold level based on the look-up table data. For this assumption to hold, the control system 112 may therefore be further configured to operate the air handling system 108 in the fresh air mode for a minimum period prior to initiating the air recirculation mode. To give an example, the minimum period may be less than or equal to the maximum period determined for the air recirculation mode, for example.

The output module 208 of the control system 112 is configured to output one or more control signals to the air handling system 108 for terminating the air recirculation mode once the maximum period has elapsed from initiation of the air recirculation mode.

To give an example, the input module 202 may therefore receive a signal indicative of a start time of the air recirculation mode and the output module 208 may output the one or more control signals to the air handling system 108 once the maximum period has elapsed in order to terminate the air recirculation mode. Alternatively, the control system 112 may be confined to setting the duration of the air recirculation mode and the control system 112 may therefore be configured to output one or more control signals to a controller of the air handling system 108 for setting the maximum period. That controller may, in turn, record a start time when the air recirculation mode is initiated and subsequently control the air handling system 108 to terminate the air recirculation mode once the determined period has elapsed.

In this manner, the system 102 is configured to automatically shut off the air recirculation mode once the maximum period has elapsed to ensure that one or more air quality parameters, such as the CO2 concentration, do not exceed acceptable limits or thresholds. As most road homologated vehicles have a pre-existing occupant detection system 110 in place for seatbelt engagement detection, the information captured by those pre-existing sensors can be used for the additional purpose of controlling the air handling system 108 in embodiments of the present invention.

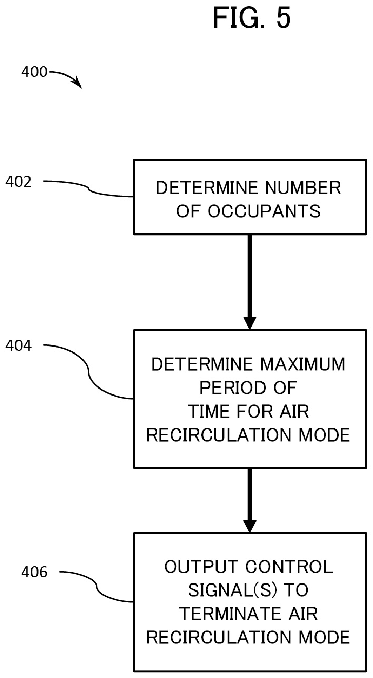

FIG. 5 shows an example method 400 of operating the system 102 to control an air recirculation mode of the air handling system 108, in accordance with an embodiment of the disclosure.

In examples, the air recirculation mode may be initiated manually, for example, in response to a user command provided via interaction with a human-machine interface of the vehicle. Alternatively or additionally, the air handling system 108 may be configured to automatically initiate the air recirculation mode, for example following vehicle start-up or following a period, such as a threshold period, of operation in the fresh air mode of operation.

In each case, the method 400 begins, in step 402, with the occupant detection system 110 determining a number of occupants inside the vehicle cabin 106 and transmitting a signal indicative of the number of occupants to the control system 112.

To give an example, the occupant detection system 110 may therefore include respective seat pressure sensors 140 a-e in each of the first, second, third, fourth and fifth seats 105 a-e shown in FIG. 1. In step 402, the occupant detection system 110 may therefore receive signals from the seat pressure sensors 140 a-e indicating that the first, second and third seats 105 a-c are occupied and transmit a corresponding signal to the control system 112 indicating that three occupants are present inside the vehicle cabin 106.

It shall be appreciated that while it is important to know how many occupants are inside the vehicle cabin 106 when the air recirculation mode is initiated, the number of occupants may be determined in response to initiating the air recirculation mode or at any point prior to initiating the air recirculation mode. For example, the occupant detection system 110 may be triggered to determine the number of vehicle occupants on startup of the vehicle 100, upon opening /closing a vehicle door, or upon detecting a seatbelt engagement / disengagement (or any other change in the vehicle occupancy. The number of occupants determined, in step 402, may therefore be stored in the memory module 206, for example, and recalled when the recirculation mode is initiated.

In step 404, the control system 112 receives the signal from the occupant detection system 110 and determines a maximum period for operating the air handling system 108 in the air recirculation mode based on the indicated number of occupants.

The control system 112 may therefore process the signal received at the input module 202 and use the one or more lookup tables to determine the maximum period for the air recirculation mode based on the indicated number of occupants.

To continue the previous example, the processor module 204 may therefore determine that three occupants are present inside the vehicle cabin 106. Based on such information, the processor module 204 may be configured to apply one or more data processing algorithms to the second curve 304(associated with three occupants inside the vehicle cabin 106) stored in the one or more look-up tables. The data processing algorithm(s) may be configured to read-off, or otherwise, determine the maximum time period for ensuring that the CO2 concentration remains below a threshold level, which may be set at 1000 ppm for example.

The processor module 204 may therefore determine the time taken, according to the second curve 304, for the CO2 concentration level to increase from the baseline level, when the air recirculation mode was initiated, to the threshold level. The processor module 204 may therefore determine a maximum period for the air recirculation mode of approximately 275 seconds or four and a half minutes, using the second curve 304 shown in FIG. 4.

Once the maximum period has been determined, the control system 112 outputs one or more control signals to the air handling system 108, in step 404, for terminating the air recirculation mode once the maximum period has elapsed.

In examples, the control system 112 may therefore output the determined maximum period to a respective controller of the air handling system 108, which, in turn, monitors the duration of the air recirculation mode and terminates the air recirculation mode once the maximum period has elapsed. Alternatively, the control system 112 may be configured to perform step 402 and/or step 404 in response to the air recirculation mode being initiated and the control system 112 may therefore output the one or more control signals, in step 406, once the control system 112 has determined that the maximum period has elapsed.

In this manner, the control system 112 may therefore use the determined maximum period while operating the air handling system 108 in the air recirculation mode, or determine the maximum period prior to operating the air handling system 108 in the air recirculation mode for subsequent usage upon initiating the air recirculation mode.

In order to terminate the air recirculation mode, the air handling system 108 may be configured to operate the one or more airflow control elements 124 of the air handling system 108 to switch to the fresh air mode of operation. For example, the air handling system 108 may therefore operate the flap 124 between the positions shown in FIG. 2B and 2A to close off the second air duct 128, and thereby cut-off the supply of recirculated air 122, while restoring the fresh air 120 supply to the vehicle cabin 106.

In this manner, the fresh air 120 supply to the vehicle cabin 106 is increased such that there is a greater proportion of fresh air to recirculated air supplied to the vehicle cabin 106. In this manner, the fresh air replaces the recirculated air 122, and improves the cabin air quality such that the CO2 concentration level, for example, in the vehicle cabin 106 does not exceed the respective threshold. As a result, the control system 112 avoids inducing the detrimental effects of air recirculation, such as drowsiness, while maximising the energy saving benefits of the recirculated air 122.

It will be appreciated that various changes and modifications can be made to the examples described above without departing from the scope of the present invention.

For example, after the maximum period has elapsed, and the air recirculation mode has been terminated, the system 102 may be further configured to warn a user, for example via a human-machine interface of the vehicle 100, that there is a risk of elevated CO2 in the cabin 106 associated with further use of the air recirculation mode.

Additionally, in the example described above, it shall be appreciated that the maximum period for the air recirculation mode is determined based on the assumption that the CO2 concentration level is equal to a baseline concentration of CO2 present in fresh air when the air recirculation mode is initiated (e.g. equal to a predefined normal concentration of CO2 present in fresh air).

In examples, the system 102 may therefore be configured to operate the air handling system 108 in the fresh air mode of operation for a minimum time period prior to, or following, the air recirculation mode in order to ensure that the air quality inside the vehicle cabin 106 has been restored to the baseline level. When the recycled air supply is cut-off in the fresh air mode, the baseline level may be reached within a matter of seconds. However, it shall be appreciated that the time taken to reach the baseline level will similarly depend on the proportions of fresh air to recirculated air provided in the fresh air mode of operation and, to a certain extent, the number of occupants inside the vehicle cabin 106.

In examples, the control system 112 may therefore be configured to determine the minimum period between operations of the air handling system 108 in the air recirculation mode in substantially the same manner using respective test data relating to the change in the air quality parameters over time during the fresh air mode of operation. Such test data may similarly be incorporated into one or more look-up tables stored in the control system 112 and used to output one or more control signals for activating or authorising the air recirculation mode.

In other examples, the control system 112 may be configured to use corresponding test data applicable to the fresh air and air recirculation modes to continuously or repeatedly model the air quality parameter while driving based on the indicated number of occupants and the time spent in each mode of operation. Hence, the control system 112 may be configured to model the increase of the CO2 concentration in the vehicle cabin 106 while operating in the air recirculation mode and model the subsequent reduction of the CO2 concentration in the vehicle cabin 106 when operating in the fresh air mode of operation. In this case, when determining the maximum period for the air recirculation mode it shall be appreciated that the baseline level, upon initiating the air recirculation mode, may be updated based on the current estimate of the air quality parameter obtained from the model.

In other examples, the control system 112 may receive a reference baseline CO2 concentration level inside the vehicle cabin 106 when the air recirculation mode is initiated and the control system 112 may use the one or more look-up tables to determine the maximum period based on a calculation of the time taken for the CO2 concentration level to increase from the reference baseline level to the threshold level.

Furthermore, although not described detail, it shall be appreciated that the maximum period for the air recirculation mode may be reset if the air recirculation mode is otherwise cancelled or overridden, for example upon opening a window allowing fresh air to flow into the vehicle cabin.
(1) In a control system for an air handling system of a vehicle according to an embodiment, the air handling system 108 controls delivery of fresh air 120 and recirculated air 122 to a cabin 106 of the vehicle 100. The control system 112 comprises one or more controllers, and the one or more controllers are configured to receive a signal indicative of a number of occupants within the cabin 106, determine a maximum period for operating the air handling system 108 in an air recirculation mode based on the number of occupants, and output one or more control signals to the air handling system 108 for terminating the air recirculation mode once the maximum period has elapsed from initiation of the air recirculation mode.
   With the above configuration, the air handling system 108 can indirectly control air quality within the cabin 106 based on the occupancy of the cabin 106. The control system 112 eliminates the need for complex and expensive air quality sensors and instead utilizes the correlation between cabin occupancy and changes in air quality over time to derive the maximum period for operating in the air recirculation mode. Therefore, according to the above configuration, a simpler and less expensive control system 112 for the air handling system 108 of the vehicle 100 can be provided. This maximum period is adjustable such that the control system intervenes as carbon dioxide levels increase and terminates the recirculation mode when air quality levels are expected to reach a threshold level.
(2) Further, in the embodiment, the one or more control signals may include a control signal for controlling the air handling system 108 to switch the air handling system 108 from the air recirculation mode to a fresh air mode of operation. Thereby, air quality within the cabin 106 can be enhanced by introducing fresh air 120 into the cabin 106 to dilute the recirculated air 122 within the cabin 106 and discharging poorer quality air from the cabin 106 to the atmosphere.
(3) Furthermore, in the embodiment, the air handling system 108 may cut-off fresh air 120 delivery to the cabin 106 during the air recirculation mode of operation. Cutting-off fresh air 120 delivery to the cabin 106 during the air recirculation mode of operation is beneficial when the temperature of the air outside the cabin 106 is significantly different from the air within the cabin 106. Thereby, occupant comfort within the cabin 106 can be improved and energy requirements for conditioning the cabin 106 can be minimized. Additionally, when the fresh air 120 or the outside air itself is polluted to such an extent that entering the cabin 106 would adversely affect the air quality of the cabin 106, the air recirculation mode helps to suppress the above problem.
(4) Further, in the embodiment, the one or more controllers may be configured to determine the maximum period for the air recirculation mode using a look-up table, the look-up table comprising data indicative of the time taken from initiating the air recirculation mode, for an air quality parameter inside the cabin 106 to reach a threshold value for respective numbers of vehicle occupants. Thereby, the look-up table can be used to determine the maximum period for the air recirculation mode based on cabin occupancy, and data necessary for operation of the control system 112 can be simply provided. Additionally, experimental data may be used to generate or derive each time threshold value for each number of occupants within the cabin 106 stored in the look-up table.
(5) Furthermore, in the embodiment, the air quality parameter may be a level of carbon dioxide inside the cabin 106 or a carbon dioxide concentration level inside the cabin 106. The increase over time in the carbon dioxide concentration of the air within the cabin 106 is strongly correlated with the number of occupants within the cabin 106, as it is due to the respiration of the occupants. Inhaling air containing excessive levels of carbon dioxide causes headaches, drowsiness, reduced concentration, and the like. With the above configuration, these symptoms can be suppressed and alleviated.
(6) Further, in the embodiment, the look-up table data may comprise test data associated with a test version of the vehicle 100. For example, it may be research data relating to cabin air quality over time for a given cabin 106 based on its occupancy. The air quality within the cabin 106 based on cabin occupancy depends on the total volume of air contained within the cabin 106 and passive air exchange that may occur. Therefore, the results may vary by model, and it is desirable to tailor the look-up table data for a given cabin 106.
(7) Furthermore, in the embodiment, the test data may comprise real-world measurements obtained from the test version of the vehicle 100 while monitoring the air quality parameter during the air recirculation mode. Bench testing or simulation may generate inaccurate results due to idealized or overly simplified test conditions. Demonstrating the test data with real-world measurements ensures accuracy of the data and enables the control system 112 to provide desirable results.
(8) Further, in the embodiment, the look-up table data may comprise one or more graphs 300 plotting the variation over time, from initiating the air recirculation mode, of the air quality parameter for respective numbers of vehicle occupants. By providing the control system 112 with a plot of air quality information over time for a given cabin occupancy, it becomes possible to enhance control of the air recirculation system, for example, by mixing fresh air 120 and recirculated air 122 as the air quality parameter approaches a selected threshold value.
(9) Furthermore, in the embodiment, the air handling system 108 may comprise one or more airflow control elements 124 that are controlled to set a respective proportion of fresh air 120 to recirculated air 122 delivery to the cabin 106 when operated in the air recirculation mode.
(10) The one or more airflow control elements 124 may include a flap 124 arranged at an outlet of a first air duct 126 for a supply of fresh air 120, wherein the flap 124 may be arranged at a junction 130 between the first air duct 126 and a second air duct 128 for a supply of recirculated air 122. With the above configuration, mixing of recirculated air 122 and fresh air 120 from outside the cabin 106 is enabled, providing the advantage of partially extending effective recirculation of cabin air.
(11) Further, in the embodiment, the control system 112 may be connectable to an occupant detection system 110 of the vehicle 100, and the control system 112 may be configured to receive the signal indicative of the number of vehicle occupants from the occupant detection system 110. The occupant detection system 110 is widely adopted in modern vehicles 100 and may provide additional functionality to other control systems 112 of the vehicle 100. For example, the occupant detection system 110 may be used by a seatbelt warning light system. Therefore, the control system 112 can advantageously utilize existing vehicle sensors and may be operable without requiring additional sensors in the vehicle 100. This can enhance the value of the existing occupant detection system 110 and reduce the cost of the air handling system 108.
(12) Furthermore, in the embodiment, the occupant detection system 110 may include one or more: seat pressure sensors 140a-e or seatbelt engagement sensors. Utilizing existing seat pressure sensors 140a-e, seatbelt engagement sensors, or a combination of the two provides a means for automatically detecting cabin occupancy of the vehicle 100.
(13) Further, in another embodiment, there may be provided a system for a vehicle comprising: an air handling system 108 for controlling delivery of fresh air 120 and recirculated air 122 to a cabin 106 of the vehicle 100; and an occupant detection system 110 for detecting a number of vehicle occupants inside the vehicle 100.
(14) Furthermore, in another embodiment, there may be provided a vehicle 100 comprising the control system 112 or the system for a vehicle described in the preceding aspects of the present invention.
(15) In a method of controlling an air handling system of a vehicle according to an embodiment, the air handling system 108 controls delivery of fresh air 120 and recirculated air 122 to a cabin 106 of the vehicle 100. The method comprises: obtaining a signal indicative of a number of occupants within the cabin 106; determining a maximum period for operating the air handling system 108 in an air recirculation mode based on the number of occupants; and controlling the air handling system 108 to terminate the air recirculation mode once the maximum period has elapsed from initiation of the air recirculation mode. According to the above method, simpler and less expensive control of the air handling system 108 of the vehicle 100 can be performed.

The embodiments above are merely exemplary, and have been described to facilitate understanding of the invention. The technical scope of the invention is not limited to the specific technical matters disclosed in the embodiments above, and includes various modifications, changes, alternative techniques, or the like, which can be easily derived therefrom.

### REFERENCE SIGNS LIST

- 100: vehicle
- 106: cabin
- 108: air handling system
- 110: occupant detection system
- 112: control system
- 120: fresh air
- 122: recirculated air
- 124: flap (airflow control element)
- 126: first air duct
- 128: second air duct
- 130: junction
- 140 a-e: seat pressure sensor
- 300: graph

## Claims

1. A control system for an air handling system of a vehicle, the air handling system controlling delivery of fresh air and recirculated air to a cabin of the vehicle, and
the control system comprises one or more controllers, wherein
the one or more controllers are configured to:
receive a signal indicative of a number of occupants within the cabin;
determine a maximum period for operating the air handling system in an air recirculation mode based on the number of occupants; and
output one or more control signals to the air handling system for terminating the air recirculation mode once the maximum period has elapsed from initiation of the air recirculation mode.

2. A control system according to claim 1, wherein
the one or more control signals include a control signal for controlling the air handling system to switch the air handling system from the air recirculation mode to a fresh air mode of operation.

3. A control system according to claim 1 or 2, wherein
the air handling system cuts-off fresh air delivery to the cabin during the air recirculation mode of operation.

4. A control system according to any of claims 1 to 3, wherein
the one or more controllers are configured to determine the maximum period for the air recirculation mode using a look-up table, the look-up table comprising data indicative of the time taken from initiating the air recirculation mode, for an air quality parameter inside the cabin to reach a threshold value for respective numbers of vehicle occupants.

5. A control system according to claim 4, wherein
the air quality parameter is a level of carbon dioxide inside the cabin or a carbon dioxide concentration level inside the cabin.

6. A control system according to claim 4 or 5, wherein
the look-up table data comprises test data associated with a test version of the vehicle.

7. A control system according to claim 6, wherein
the test data comprises real-world measurements obtained from the test version of the vehicle while monitoring the air quality parameter during the air recirculation mode.

8. A control system according to any of claims 4 to 7, wherein
the look-up table data comprises one or more graphs plotting the variation over time, from initiating the air recirculation mode, of the air quality parameter for respective numbers of vehicle occupants.

9. A control system according to any of claims 1 to 8, wherein the air handling system comprises one or more airflow control elements that are controlled to set a respective proportion of fresh air to recirculated air delivery to the cabin when operated in the air recirculation mode.

10. A control system according to claim 9, wherein
the one or more airflow control elements include a flap arranged at an outlet of a first air duct for a supply of fresh air, wherein the flap is arranged at a junction between the first air duct and a second air duct for a supply of recirculated air.

11. A control system according to any of claims 1 to 10, wherein
the control system is connectable to an occupant detection system of the vehicle, and the control system is configured to receive the signal indicative of the number of vehicle occupants from the occupant detection system.

12. A control system according to claim 11, wherein
the occupant detection system includes one or more: seat pressure sensors or seatbelt engagement sensors.

13. A system for a vehicle having the control system according to any of claims 1 to 12 comprising:
an air handling system for controlling delivery of fresh air and recirculated air to a cabin of the vehicle; and
an occupant detection system for detecting a number of vehicle occupants inside the vehicle.

14. A vehicle comprising the control system according to any of claims 1 to 12 or the system according to claim 13.

15. A method of controlling an air handling system of a vehicle, wherein
the air handling system controls delivery of fresh air and recirculated air to a cabin of the vehicle, the method comprising:
obtaining a signal indicative of a number of occupants within the cabin;
determining a maximum period for operating the air handling system in an air recirculation mode based on the number of occupants; and
controlling the air handling system to terminate the air recirculation mode once the maximum period has elapsed from initiation of the air recirculation mode.
